# EUROPÄISCHE PATENTSCHRIFT

(11) **EP 1 237 640 B1**
(45) Veröffentlichungstag und Bekanntmachung des Hinweises auf die Patenterteilung: **11.06.2003**
(21) Anmeldenummer: 00989861.0
(22) Anmeldetag: 17.11.2000
(51) Int. Cl.: B01D 29/11, B01D 29/66

(54) **RÜCKSPÜLFILTERVORRICHTUNG**
BACKFLUSH FILTER DEVICE
DISPOSITIF FILTRANT A RETROLAVAGE

(30) Priorität: 25.11.1999 DE 19956859
(43) Veröffentlichungstag der Anmeldung: 11.09.2002
(73) Patentinhaber: Hydac Filtertechnik GmbH, 66280 Sulzbach/Saar (DE)
(72) Erfinder: SCHÖN, Otmar, 66450 Bexbach-Höchen (DE)
(74) Vertreter: Bartels, Martin Erich Arthur
(86) Internationale Anmeldenummer: EP0011419
(87) Internationale Veröffentlichungsnummer: WO01037965

(56) Entgegenhaltungen:
- DE-A- 4 312 731
- DE-C- 19 608 104
- US-A- 4 462 016
- US-A- 4 666 592
- US-A- 5 011 023

## Beschreibung

Die Erfindung betrifft eine Rückspülfiltervorrichtung mit den Merkmalen des Oberbegriffes des Patentanspruches 1.

Eine dahingehende Rückspülfiltervorrichtung ist durch die WO 98/42426 bekannt. Bei der bekannten Rückspülfiltervorrichtung ist ein Teil der eingesetzten Filterelemente konisch ausgebildet, insbesondere in Form von sogenannten Spaltsiebrohrfilterelementen. Aufgrund der konischen Ausbildung ist der Abstand zwischen den einzelnen konischen Spaltsiebrohrfilterelementen oder zwischen diesen und zylindrischen Filterelementen vergrößert mit der Folge, daß auch der Ausströmraum im Filtergehäuse vergrößert und mithin der Abströmwiderstand im Filterbetrieb erniedrigt ist. Beim Rückspülen ist das konische Filterelement gegen einen zylindrischen eindeutig im Vorteil. Ursache hierfür ist in erster Linie der relativ größere Austrittsquerschnitt der konischen Filterelemente gegenüber zylindrischen bei gleicher Filteroberfläche. Da der Austrittsquerschnitt bei den konischen Filterelementen gegenüber dem durch die Filteroberfläche gebildeten Eintrittsquerschnitt, also der freien Elementfläche, jedoch relativ klein ist, bildet sich hier abhängig von der Größe des Strömungswiderstandes des Spaltrohres ein Engpaß, in dem ein großer Teil des Systemdruckes abfällt. Es treten also geringere Druckverluste auf, was energetisch beim Rückspülen günstiger ist.

Beim Rückspülen wird ein Großteil des Volumendurchsatzes bei konischen und zylindrischen Filterelementen grundsätzlich am unteren Filterende erzielt. Die Volumenströme nehmen dann sehr schnell ab. Da das konische Element wesentlich weiter zurückgespült wird, ist zusätzlich der Geschwindigkeitsgradient geringer, so daß unter Einbeziehung der Geschwindigkeitsprofile bezogen auf die Filteroberfläche sich aufgrund der Elementkonizität ein zusätzlicher Reinigungseffekt gegenüber zylindrischen Elementen ergibt. Durch die erreichte, im wesentlichen konstante Geschwindigkeit bei der Abreinigung der.konischen Filterelemente erfolgt dies schonend, was die Standzeit dahingehender Filterelemente verlängert.

Beim Rückspülen werden vorzugsweise alle Filterelemente nacheinander regeneriert. Während der Rückspülung einzelner Elemente wird die Filtration über die restlichen Spaltrohre fortgesetzt, so daß der Filtrationsbetrieb zu keiner Zeit unterbrochen wird. Der in der Rückspülfiltervorrichtung anstehende Überdruck läßt während der Rückspülphase einen geringen Teilstrom des Filtrates das zu reinigende Filterelement in umgekehrter Richtung durchströmen, wobei der Schmutz vom Element abgelöst und ausgetragen wird. Die mit der Rückspülung einhergehenden Ablaufmenge ist nicht genau dosierbar und beruht auf Erfahrungswerten. In der Regel wird zeitlich länger mit großen Mengen rückgespült, um die Abreinigung zu gewährleisten. Im übrigen kommt es bei derartigen Rückspülungen zu Druckverlusten, was die Abreinigungsleistung beeinträchtigt.

Durch die EP-A-0218 034 ist eine Vorrichtung zur Reinigung von porösen Filterplatten bekannt, die von beiden Seiten zugänglich sind und zur Filtration von Wasser in offenen Becken oder Kanälen benutzt werden. Diese Fitterplatten werden bei Bedarf von einer hin- und herverfahrbaren Vorrichtung gereinigt, die auf der Seite des reinen Mediums Spritzdüsen und auf der Seite des verschmutzten Mediums ein Absaugrohr hat. Ein besonderer Absaugkasten umgibt die Spritzdüsen und steht bei Betrieb unter Unterdruck, so daß die von den Spritzdüsen aufgewirbelten Schmutzpartikel ständig abgesaugt werden und das reine Medium auch nicht während des Reinigungsbetriebes verunreinigt wird. Die dahingehend bekannte Lösung verlangt zwingend einen direkten Angriff an der jeweiligen porösen Filterplatte, so daß sie für den Einsatz in Rückspülfiltervorrichtungen nicht geeignet ist.

Durch die US-A-4,462,916 ist eine gattungsgemäße Rückspülfiltervorrichtung bekannt, wobei zur Unterstützung der Rückspülung als Unterdruckeinrichtung eine Saugpumpe dient, die an dem jeweils rückzuspülenden Filterelement fortlaufend einen Unterdruck erzeugt und dergestalt abreinigt. Die von der Pumpe aufzubringende Saugkraft ist gleichförmig verlaufend und abhängig von der Pumpenleistung. Die mittels der Hydropumpe abgesaugten Verunreinigungen werden auf ihrer Abgabeseite an eine Abgabevorrichtung weitergegeben, die dergestalt die Entsorgung außerhalb der Filtervorrichtung vornimmt. Aufgrund des fortlaufenden Pumpenbetriebes ist der Energieaufwand für die jeweilige Abreinigung des vorgesehenen Filterelementes entsprechend hoch. Auch reicht die Saugkapazität regelmäßig nicht aus, um insbesondere hartnäckige Verschmutzungen beseitigen zu können.

Demgemäß ist in der DE-C-196 08 104 bereits eine Druckimpulsrückspülung von Filtern beschrieben, insbesondere von Querstromfiltern, mittels eines Spülmediums. Das genannte Spülmedium ist in mindestens einem Hydrospeicher bevorratbar, der mittels eines Druckimpulses die Rückspülung vornimmt, wobei der jeweilige Hydrospeicher auf seiner Gasseite an eine Betätigungseinrichtung angeschlossen ist, die den Vorspanngasdruck auf der Gasseite des jeweiligen Hydrospeichers liefert. Alternativ hierzu ist auch eine Vorspannung des Speichers mit einem Fluid, insbesondere mittels Wasser, möglich, das die Betätigungseinrichtung liefert. Bei der bekannten Druckimpulsrückspülung wird die abzureinigende Verschmutzung in Richtung der Retentatseite des Filters gespült, was bei Querstromfiltem nicht schädlich ist, was aber bei Rückspülfiltervorrichtungen der gattungsgemäßen Art zu keinen brauchbaren Ergebnissen führen würde, da die Reinseite mit dem Filtrat durch die abgereinigte Verschmutzung des jeweils rückgespülten Filterelementes dann verunreinigt werden würde.

Ausgehend von diesem Stand der Technik liegt der Erfindung die Aufgabe zugrunde, die Wirkung der dahingehenden Rückspülung bei einer Rückspülfiltervorrichtung der eingangs genannten Art weiter zu verstärken, um auch hartnäckigste Verschmutzungen entfernen zu können. Ferner soll der Abreinigungsvorgang energetisch günstig und definiert stattfinden. Eine dahingehende Aufgabe löst eine Rückspülfiltervorrichtung mit den Merkmalen des Patentanspruches 1 in seiner Gesamtheit.

Dadurch, daß gemäß dem kennzeichnenden Teil des Patentanspruches 1 die Unterdruckeinrichtung einen Hydrospeicher mit einem Trennelement aufweist und daß das Trennelement des Hydrospeichers für eine Saug- oder Pumpbewegung an eine Betätigungseinrichtung angeschlossen ist, erfolgt ein dosiertes Abreinigen mit vorgegebenen Rückspülmengen, wobei die Rückspülung verstärkt durch den angelegten Unterdruck der Unterdruckeinrichtung in Form des Hydrospeichers erfolgt. Mithin können durch den Einsatz des Hydrospeichers auch bei geringen Systemdrücken und mithin energetisch günstig hartnäckige Verschmutzungen an der wirksamen Filterfläche des Filterelementes entfernt und aus der Filtervorrichtung abgeführt werden. Die Unterstützung der Rückspülung mittels des Hydrospeichers ist sowohl wirksam für zylindrische als auch konisch ausgebildete Filterelemente.

Die Rückspülmenge ist definiert durch die Volumenaufnahmekapazität des Hydrospeichers und durch den Anschluß des Trennelementes an die Betätigungseinrichtung läßt sich das Trennelement derart ansteuern, daß impulsartig ein Unterdruckstoß am abzureinigenden Filterelement erzeugt ist, was die Entfernung von hartnäckigen Verschmutzungen und mithin zur Erhöhung der Abreinigungsleistung mit beiträgt

Bei einer bevorzugten Ausführungsform der erfindungsgemäßen Rückspülfiltervorrichtung ist für die Rückspülung ein antreibbarer Spülarm vorgesehen, der einen Fluidaustritt für verschmutztes Fluid aufweist und der nacheinander unter die freien Einlaßquerschnitte der Filterelemente verfahrbar ist. Auf diese Art und Weise läßt sich immer definiert ein Filterelement über den Spülarm von dem sonstigen Filtrationsbetrieb mit den anderen Filterelementen für einen Rückspülvorgang ansteuern. Ferner baut die dahingehende Anordnung konstruktiv klein auf und läßt sich platzsparend in einem Filtergesamtgehäuse unterbringen. Vorzugsweise ist dabei an den Fluidaustritt des Spülarmes die Unterdruckeinrichtung angeschlossen.

Besonders gute Ergebnisse lassen sich bei der Rückspülung erzielen, sofern als Hydrospeicher ein Membranspeicher eingesetzt ist.

Das Trennelement des Hydrospeichers ist dann für eine Saug- oder Pumpbewegung an die Betätigungseinrichtung in Form eines Arbeitszylinders angeschlossen. Bei der Pumpbewegung ist das im Hydrospeicher eingesaugte verschmutzte Fluid vorzugsweise über eine Abgabevorrichtung nach außen abführbar, wobei während des Abgabevorganges der Fluidaustritt über ein Sperrteil verschlossen ist. Die dahingehend ausgebildete Unterdruckeinrichtung ist kostengünstig realisierbar.

Bei einer bevorzugten Ausführungsform der erfindungsgemäßen Rückspülfiltervorrichtung ist die Betätigungseinrichtung über eine Ventileinheit ansteuerbar, wobei das Sperrteil aus einem Rückschlagventil gebildet ist, das in Richtung des Hydrospeichers öffnet. Die Betätigungseinrichtung läßt sich pneumatisch, hydraulisch oder elektrisch antreiben.

Bei einer weiteren bevorzugten Ausführungsform der erfindungsgemäßen Rückspülfiltervorrichtung ist das Einsaugvolumen des Hydrospeichers dem Durchtrittsvolumen der für die Rückspülung des jeweiligen Filterelementes vorgesehenen Fluidmenge angepaßt, so daß eine vollständige. über die Unterdruckeinrichtung unterstützte Abreinigung stattfindet.

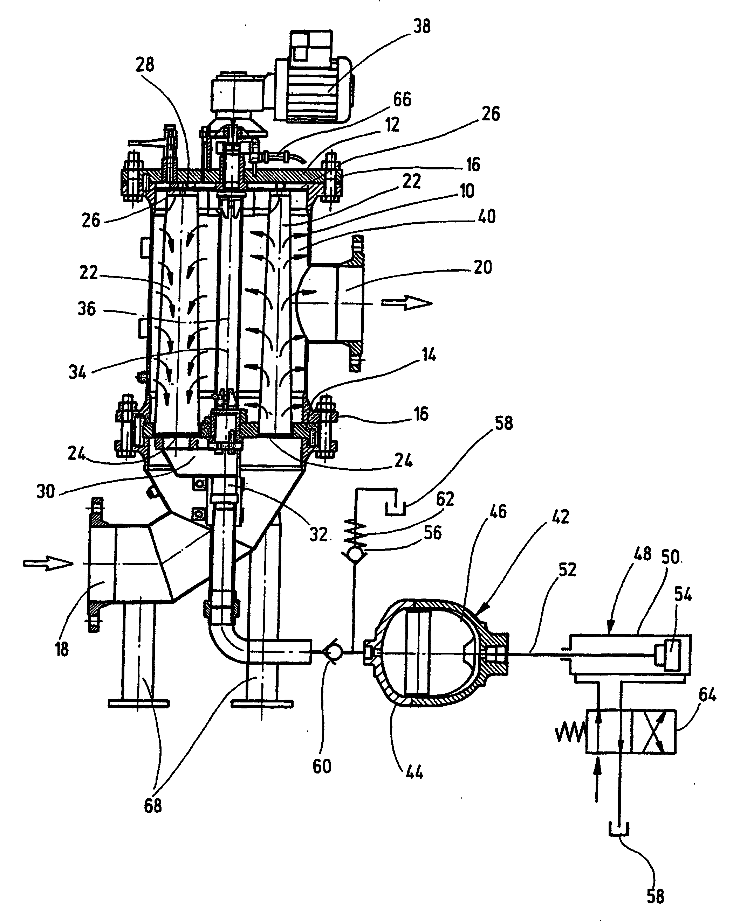

Im folgenden wird die erfindungsgemäße Anordnung gemäß der Zeichnung näher erläutert. Es zeigt die einzige Figur in prinzipieller und nicht maßstäblicher Darstellung teilweise im Schnitt, teilweise in Ansicht dargestellt eine Seitenansicht auf eine Ausführungsform der erfindungsgemäßen Rückspülfiltervorrichtung.

Die in der Figur gezeigte Rückspülfiltervorrichtung weist ein zylindrisches Gehäuse 10 auf mit zwei Abschlußdeckeln 12, 14, die über Flanschverbindungen 16 an dem Filtergehäuse 10 festlegbar sind. Das Filtergehäuse 10 der Rückspülfiltervorrichtung weist einen Filtereinlaß 18 auf für das zu filtrierende Fluid sowie einen Filterauslaß 20 für das filtrierte Fluid. Die Fluidrichtung im Filtrierbetrieb durch das Gehäuse 10 ist in der Figur mit entsprechenden Pfeilen am Filtereinlaß 18 und am Filterauslaß 20 angegeben.

In die Filtervorrichtung sind nach oben hin konisch zulaufende Filterelemente 22 eingesetzt, wobei an die Stelle der konischen Filterelemente 22 auch zumindest teilweise zylindrische Filterelemente (nicht dargestellt) treten können. Die angesprochenen konischen Filterelemente 22, die aus sogenannten Spaltsiebrohrfilterelementen bestehen können, sind in Abständen voneinander entlang eines zylindrischen Kreisbogens innerhalb des Filtergehäuses 10 angeordnet. Bei einer nicht näher dargestellten Ausführungsform können auch in Gruppen unterteilt mehrfach entlang von zylindrischen Kreisbögen die Filterelemente 22 angeordnet sein.

Die in der Figur dargestellten Filterelemente 22 münden mit ihrem Einlaßquerschnitt 24, also mit ihrer freien Öffnung, in zylindrisch entsprechend ausgebildete Ausnehmungen des unteren Abschlußdeckels 14. An ihrem jeweils anderen gegenüberliegenden Ende sind die zum Einsatz kommenden Filterelemente 22 mit Abschlußkappen 26 versehen, über die die Filterelemente 22 an einem plattenförmigen Zwischenstück 28 gehalten sind, an das von oben her der obere Abschlußdeckel 12 stößt.

Für die eigentliche Rückspülung mit der Rückspülfiltervorrichtung ist ein antreibbarer Spülarm 30 vorgesehen, der auf seiner Unterseite einen Anschluß in Form eines Fluidaustrittes 32 für verschmutztes Fluid vorsieht. Der Spülarm 30 läßt sich über ein Antriebsgestänge 34 nacheinander unter die Einlaßquerschnitte 24 der Filterelemente 22 verfahren. Die Rückspülung erfolgt also kontinuierlich mit dem eigentlichen Filtrationsvorgang, wobei nur die Filterelemente 22 rückgespült werden und zwar von außen nach innen mit dem gereinigten bei der Filtration mit den sonstigen Filterelementen 22 entstehenden filtrierten Fluid, deren freie Einlaßquerschnitte 24 von dem Spülarm 30 nacheinander untergriffen sind. Die Rückspülrichtung ist in der Figur mit Pfeilen von außen nach innen angegeben und die übliche Filtrationsrichtung gleichfalls mit Pfeilen, diesmal von innen nach außen. Sind die Filterelemente 22 zu Gruppen geordnet, entlang von zylindrischen Kreisbögen mehrfach innerhalb des Filtergehäuses 10 angeordnet, benötigt der Spülarm 30 einen weiteren Armabschnitt unterschiedlicher Länge, mit der die weitere Gruppe an Filterelementen 22 seitens ihres Einlaßquerschnittes 24 untergriffen werden kann.

Der Austritt des derart verschmutzten, bei der Rückspülung entstehenden Fluids erfolgt über den rohrartig ausgebildeten Fluidaustritt 32. Das angesprochene Antriebsgestänge 34 durchgreift entlang der Längsachse 36 der Rückspülfiltervorrichtung das Filtergehäuse 10 und durchgreift sowohl den oberen Abschlußdeckel 12 als auch den unteren Abschlußdeckel 14. Für einen Antrieb des Antriebsgestänges 34, insbesondere in Form einer Hohlwelle ist am oberen Abschlußdeckel 12 eine nicht näher dargestellte Keilwellenverbindung vorgesehen, über die sich das Antriebsgestänge 34 mit einem Elektromotor 38 für einen drehenden Umlauf um die Längsachse 36 antreiben läßt.

Der Filtereinlaß 18 ist von seiner Außenwandung her in der Art eines Diffusors ausgebildet, der die Fluideintrittsgeschwindigkeit des zu filtrierenden verschmutzten Fluids reduziert bei gleichzeitiger Druckerhöhung an den durch den Spülarm 30 freigelassenen Einlaßquerschnitten 24 der konischen Filterelemente 22. Die Diffusorwirkung wird insbesondere dadurch begünstigt, daß die Eintrittsquerschnitte am Filtereinlaß 18 als auch der Querschnitt des Aufnahmeraumes 40 im wesentlichen gleich ausgebildet sind und der Übergang zwischen Filtereinlaß 18 und Aufnahmeraum 40 im wesentlichen gleichförmig ohne Querschnittsredzierung erfolgt.

Durch den konischen Aufbau der Filterelemente 22 wird erreicht, daß die Durchlaßfläche im jeweiligen Element sehr groß ist, wobei sich der Abstand zwischen den konischen Elemente 22 in Richtung des Filterauslasses 20 vergrößert, so daß dem filtrierten Fluid beim Austritt aus dem Innenraum des jeweiligen Filterelementes 22 ein kleinerer Widerstand entgegengesetzt wird gegenüber den bekannten Lösungen mit ausschließlich zylindrischen Elementen. Des weiteren ist durch den konischen Aufbau der Filterelemente 32 ein konstanter Flüssigkeitsstrom beim Rückspülen der Elemente erreicht. Zur Unterstützung dieser Rückspülung ist eine als Ganzes mit 42 bezeichnete Unterdruckeinrichtung vorhanden, die an dem jeweils rückzuspülenden Filterelement 22 einen Unterdruck oder eine Saugwirkung erzeugt, was im folgenden noch näher erläutert werden wird.

Für die verbesserte Abreinigung beim Rückspülen ist an den Fluidaustritten 32 des Spülarmes 30 die Unterdruckeinrichtung 42 angeschlossen. Die Unterdruckeinrichtung 42 weist einen Hydrospeicher mit Trennelement auf, wobei bei der vorliegenden Ausführungsform als Hydrospeicher ein Membranspeicher 44 eingesetzt ist, der als Trennelement 46 eine innerhalb des Membranspeichers 44 hin und her bewegbare Trennmembran aufweist, die im wesentlichen gas- und fluidundurchlässig ist und insbesondere aus einem Kautschukmaterial besteht. Das angesprochene Trennelement 46 des Membranspeichers 44 ist zum Erzeugen einer Saug- oder Pumpbewegung an eine als Ganzes mit 48 bezeichnete Betätigungseinrichtung angeschlossen.

Die Betätigungseinrichtung 48 weist einen üblichen Arbeitszylinder 50 auf, dessen Kolbenstange 52 in abgedichteter Form das Gehäuse des Membranspeichers 44 durchdringt, wobei das freie Ende der Kolbenstange 52 fest mit dem Boden des Trennelementes 46 verbunden ist. Fährt der Kolben 54 des Arbeitszylinders 50 aus, bewegt er sich also in Blickrichtung auf die Figur, gesehen von seiner dort gezeigten Stellung, in seine linke Betätigungsstellung, nimmt er über die Kolbenstange 52 die Trennmembran gleichfalls nach links mit und übt derart eine Pumpbewegung aus. Bei der entgegengesetzten Bewegungsrichtung findet dann ein Saugvorgang für die Unterdrukkeinrichtung 42 statt. Bei der Hin- und Herbewegung des elastischen Trennelementes 46 ist dieses durch die Innenseite des Gehäuses begrenzt, das dahingehend Anschläge ausbildet. An seinem anderen, der Kolbenstange 52 gegenüberliegenden Ende ist der Membranspeicher 44 fluidführend mit dem Fluidaustritt 32 verbunden. Wie die obigen Ausführungen deutlich machen, kann dem Grunde nach ein üblicher Membranspeicher 42 eingesetzt werden, der ohne große bauliche Änderungen dann seinem Verwendungszweck als Unterdruckeinrichtung 42 dient.

In die fluidführende Verbindung zwischen Membranspeicher 44 und Fluidaustritt 32 ist im Nebenzweig eine Abgabevorrichtung 56 geschaltet, mit der bei der Pumpbewegung des Membranspeichers 44 das in ihm eingesaugte verschmutzte Fluid nach außen abführbar ist. Während des dahingehenden Abgabevorganges, vorzugsweise an einen Tank 58, ist der Fluidaustritt 32 über ein Sperrteil 60 in Form eines einfachen Rückschlagventiles verschlossen. Das dahingehende Rückschlagventil als Sperrteil 60 öffnet in Richtung des Membranspeichers 44 und schließt in Richtung des Fluidaustrittes 32. Bei der angesprochenen Pumpbewegung ist also das Sperrteil 60 geschlossen und die im Membranspeicher 44 bevorratete verschmutzte Fluidmenge wird über die Abgabevorrichtung 56 an den Tank 58 abgegeben, indem ein federbelastetes Rückschlagventil 62 aufgesteuert wird. Mithin öffnet das Rückschlagventil 62 zum Tank 58 hin und wird in Richtung seiner Schließstellung federbelastet in seine Schließstellung gebracht.

Die Betätigungseinrichtung 48 ist über eine Ventileinheit 64 in Form eines üblichen 2/2-Wegeschaltventiles ansteuerbar. Die Ansteuerung über die Ventileinheit 64 kann hydraulisch oder pneumatisch vonstatten gehen, es ist jedoch auch eine unmittelbare elektromechanische Betätigung des Kolbens 54 des Arbeitszylinders 50 möglich (nicht dargestellt). Die Ansteuerung über eine Steuereinheit (nicht dargestellt) der Unterdruckeinrichtung 42 erfolgt derart, daß sobald der Spülarm 30 unter das abzureinigende Filterelement 22 gefahren ist, die Unterdruckeinrichtung 42 mit dem Ansaugvorgang beginnt, indem das Trennelement 46 über die Betätigungseinrichtung 48 von ihrer, in Blickrichtung auf die Figur gesehen, linken äußeren Verfahrstellung in die rechte Anschlagstellung gebracht wird, indem der Kolben 54 des Arbeitszylinders 50 einfährt und dann seine in der Figur dargestellte Endstellung einnimmt. Die Rückfahrbewegung kann dabei impulsartig vonstatten gehen, so daß die Unterdruckeinrichtung 42 einen Unterdruckstoß am abzureinigenden Filterelement 22 erzeugt, so daß auch hartnäckigste Verschmutzungen schlagartig abreinigbar sind.

Ist der Hydrospeicher mit dem abgereinigten verschmutzten Fluid gefüllt und fährt der Spülarm 30 zu seinem nächsten abzureinigenden Filterelement 22, wird der dahingehende Verfahrvorgang des Spülarmes 30 genutzt, um über die Abgabevorrichtung 56 das verschmutzte Fluid aus dem Hydrooder Membranspeicher 44 abzutransportieren. Hierbei verfährt mittels der Betätigungseinrichtung 48 das Trennelement 46 in pumpender Weise von seiner in der Figur gezeigten rechten Ausgangsstellung wieder zurück in die linke äußerste Pumpstellung. Anschließend steht der Hydrospeicher wiederum für einen Abreinigungsvorgang zur Verfügung. Die dahingehende Ansteuerung läßt sich aufgrund einer Überwachungseinrichtung 66 vornehmen, die die Position des Antriebsgestänges 34 für den Spülarm 30 überwacht. In Abhängigkeit von der Betätigungsstellung des Spülarmes 30 veranlaßt dann die Überwachungseinrichtung 66 über die Steuereinheit (nicht dargestellt) die Betätigung der Ventileinheit 64 und damit die Arbeitsstellung des Arbeitszylinders 50 der Betätigungseinrichtung 48.

Für einen guten Abreinigungseffekt ist vorgesehen, daß das Eingangsvolumen des Hydrospeichers dem Durchtrittsvolumen der für die Rückspülung des jeweiligen Filterelementes 22 vorgesehenen Fluidmenge angepaßt ist. Anstelle des gezeigten Membranspeichers 44 könnte auch ein anderer Hydrospeicher, beispielsweise ein Kolbenspeicher, Anwendung finden. Die Rückspülfiltervorrichtung läßt sich als integraler Bestandteil in Gesamtfluidvorrichtungen einbauen, kann jedoch auch separat aufgestellt werden, beispielsweise mittels Ständer 68 gemäß der Darstellung in der Figur.

Mit der erfindungsgemäßen Rückspülfiltervorrichtung ist eine automatische Abreinigung von verschmutzten Filterelementen möglich, ohne daß der eigentliche Filtrationsbetrieb unterbrochen werden muß. Die Rückspülfiltervorrichtung ist insbesondere zur Abscheidung von Feststoffen aus niedrigviskosen Flüssigkeiten geeignet. Dabei wird die Abreinigung des jeweiligen Filterelementes in Form einer Rückspülung durch die gezeigte Unterdruckeinrichtung verbessert.

Mit der erfindungsgemäßen Rückspülfiltervorrichtung ist es auch möglich, die benötigte Rückspülmenge zu reduzieren und zu definieren. Dies ist besonders für Produktionsströme wichtig. Die erforderliche quantifizierbare Rückspülmenge läßt sich dabei über den Verfahrweg des Trennelementes 46 und mithin über die Betätigungseinrichtung 48 vorgeben und einstellen. Insbesondere ist es derart möglich, die benötigten Rückspülmengen weitgehend zu minimieren, was dem sonstigen Filtrationsbetrieb zugute kommt.

## Patentansprüche

1. Rückspülfiltervorrichtung für den Einsatz von Filterelementen (22), die in einem Filtergehäuse (10) mit einem Filtereinlaß (18) und einem Auslaß (20) für das zu filtrierende Fluid aufnehmbar sind, wobei die Filterelemente (22) für eine Filtration oder Rückspülung in beiden Richtungen durchströmbar sind, wobei gleichzeitig die einen Filterelemente (22) die Filtration vornehmen und zumindest ein anderes Filterelement (22) zum Abreinigen seiner wirksamen Filterfläche rückspülbar ist und wobei zur Unterstützung der Rückspülung eine Unterdruckeinrichtung (42) vorhanden ist, die an dem jeweils rückzuspülenden Filterelement (22) einen Unterdruck erzeugt, **dadurch gekennzeichnet, daß** die Unterdruckeinrichtung (42) einen Hydrospeicher mit einem Trennelement (46) aufweist und daß das Trennelement (46) des Hydrospeichers für eine Saug- oder Pumpbewegung an eine Betätigungseinrichtung (48) angeschlossen ist.

2. Rückspülfiltervorrichtung nach Anspruch 1, **dadurch gekennzeichnet, daß** für die Rückspülung ein antreibbarer Spülarm (30) vorgesehen ist, der einen Fluidaustritt (32) für verschmutztes Fluid ausweist und der nacheinander unter die freien Einlaßquerschnitte (24) der Filterelemente (22) verfahrbar ist.

3. Rückspülfiltervorrichtung nach Anspruch 2, **dadurch gekennzeichnet, daß** an dem Fluidaustritt (32) des Spülarmes (30) die Unterdruckeinrichtung (42) angeschlossen ist.

4. Rückspülfiltervorrichtung nach einem der Ansprüche 1 bis 3, **dadurch gekennzeichnet, daß** der Hydrospeicher ein Membranspeicher (44) ist.

5. Rückspülfiltervorrichtung nach Anspruch 4, **dadurch gekennzeichnet, daß** die Betätigungseinrichtung (48) ein Arbeitszylinder (50) ist.

6. Rückspülfiltervorrichtung nach Anspruch 5, **dadurch gekennzeichnet, daß** bei der Pumpbewegung das im Hydrospeicher eingesaugte verschmutzte Fluid über eine Abgabevorrichtung (56) nach außen abführbar ist und daß während des Abgabevorganges der Fluidaustritt (32) über ein Sperrteil (60) verschlossen ist.

7. Rückspülfiltervorrichtung nach Anspruch 6, **dadurch gekennzeichnet, daß** die Betätigungseinrichtung (48) über eine Ventileinheit (64) ansteuerbar ist und daß das Sperrteil (60) aus einem Rückschlagventil gebildet ist, das in Richtung des Hydrospeichers öffnet.

8. Rückspülfiltervorrichtung nach einem der Ansprüche 1 bis 7, **dadurch gekennzeichnet, daß** die Filterelemente (22) aus konischen und/oder zylindrischen Spaltsiebrohrfilterelementen gebildet sind.

9. Rückspülfiltervorrichtung nach einem der Ansprüche 6 bis 8, **dadurch gekennzeichnet, daß** das Einsaugvolumen des Hydrospeichers dem Durchtrittsvolumen der für die Rückspülung des jeweiligen Filterelementes (22) vorgesehenen Fluidmenge angepaßt ist.

10. Rückspülfiltervorrichtung nach einem der Ansprüche 1 bis 9, **dadurch gekennzeichnet, daß** die Unterdruckeinrichtung (42) impulsartig einen Unterdruckstoß am abzureinigenden Filterelement (22) erzeugt.

## Claims

1. Backflush filter device for using in conjunction with filter elements (22) which can be incorporated in a filter housing (10) with a filter inlet (18) and an outlet (20) for the liquid to be filtered, whereby the filter elements (22) permit flow in both directions for filtration or backflush, whereby some filter elements (22) perform the filtering action while at least one other filter element (22) can be backflushed to clear its effective filtering surface and whereby a vacuum device (42) generating a vacuum at the filter element (22) is provided to assist the backwashing action, **characterised in that** the vacuum device (42) has a hydraulic accumulator with a separator (46) and that the separator (46) of the hydraulic accumulator is connected to an actuator (48) to produce a suction and pumping movement.

2. Backflush filter device according to claim 1, **characterised in that** a drivable flush arm (30) is provided for the backflush action, with an outlet (32) for contaminated fluid, and is movable in succession under the open inlet sections (24) of the filter elements (22).

3. Backflush filter device according to claim 2, **characterised in that** the vacuum device (42) is connected to the fluid outlet (32) of the flush arm (30).

4. Backflush device according to one of the claims 1 to 3, **characterised in that** the hydraulic accumulator is a diaphragm accumulator (44).

5. Backflush device according to claim 4, **characterised in that** the actuating device (48) is an operating cylinder (50).

6. Backflush device according to claim 5, **characterised in that** the contaminated fluid drawn into the hydraulic accumulator during the pumping movement can be carried away to the outside through the output device (56) and that the fluid outlet (32) is shut by a blocking element (60) during the output sequence.

7. Backflush device according to claim 6, **characterised in that** the actuating device (48) can be pilot-controlled via the valve unit (64) and that the blocking element (60) is formed by a non-return valve which opens in the direction of the hydraulic accumulator.

8. Backflush device according to one of the claims 1 to 7, **characterised in that** the filter elements (22) are formed by conical and/or cylindrical wedge-wire gap screen tubular filter elements.

9. Backflush filter device according to one of the claims 6 to 8, **characterised in that** the intake volume of the hydraulic accumulator is matched to the throughput volume of the quantity of fluid envisaged for backflushing the respective filter element (22).

10. Backflush device according to one of the claims 1 to 9m **characterised in that** the vacuum device (42) generates a pulse-like vacuum impact at the filter element (22) which is to be cleaned.

## Revendications

1. Dispositif de filtres de lavage à contre-courant pour l'utilisation d'éléments filtrants (22), qui peuvent être installés dans un carter de filtres (10) avec un orifice d'admission filtrant (18) et un orifice d'évacuation (20) pour le fluide à filtrer, moyennant quoi les éléments filtrants (22) peuvent être traversés dans les deux directions pour une filtration ou un lavage à contre-courant, moyennant quoi certains éléments filtrants (22) effectuent la filtration pendant qu'au moins un autre élément filtrant (22) peut être simultanément lavé à contre-courant pour le nettoyage de sa surface active filtrante et moyennant quoi, pour renforcer le lavage à contre-courant, il est prévu un dispositif à dépression (42) qui génère une dépression dans l'élément filtrant (22) à laver à contre-courant, **caractérisé en ce que** le dispositif à dépression (42) comporte un accumulateur hydraulique avec un élément de séparation (46) et **en ce que** l'élément de séparation (46) de l'accumulateur hydraulique est raccordé à un dispositif d'actionnement (48) pour un mouvement d'aspiration ou de pompage.

2. Dispositif de filtres de lavage à contre-courant selon la revendication 1, **caractérisé en ce que**, pour le lavage à contre-courant, il est prévu un bras de lavage (30) actionnable qui comporte un orifice de sortie de fluide (32) pour le fluide pollué et qui est déplaçable successivement sous les sections transversales libres d'admission (24) des éléments filtrants (22).

3. Dispositif de filtres de lavage à contre-courant selon la revendication 2, **caractérisé en ce que** le dispositif à dépression (42) est raccordé à l'orifice de sortie de fluide (32) du bras de lavage (30).

4. Dispositif de filtres de lavage à contre-courant selon l'une des revendications 1 à 3, **caractérisé en ce que** l'accumulateur hydraulique est un accumulateur à membrane (44).

5. Dispositif de filtres de lavage à contre-courant selon la revendication 4, **caractérisé en ce que** le dispositif d'actionnement (48) est un vérin hydraulique (50).

6. Dispositif de filtres de lavage à contre-courant selon la revendication 5, **caractérisé en ce que**, lors du mouvement de pompage, le fluide pollué aspiré dans l'accumulateur hydraulique peut être évacué vers l'extérieur par un dispositif de décharge (56) et **en ce que**, pendant le processus de décharge, l'orifice de sortie de fluide (32) est obturé par une pièce d'arrêt (60).

7. Dispositif de filtres de lavage à contre-courant selon la revendication 6, **caractérisé en ce que** le dispositif d'actionnement (48) peut être commandé par une unité de soupape (64) et **en ce que** la pièce d'arrêt (60) est formée par une soupape de non-retour qui s'ouvre dans le sens de l'accumulateur hydraulique.

8. Dispositif de filtres de lavage à contre-courant selon l'une des revendications 1 à 7, **caractérisé en ce que** les éléments filtrants (22) sont formés par des éléments filtrants à tubes à tamis à fentes coniques et/ou cylindriques.

9. Dispositif de filtres de lavage à contre-courant selon l'une des revendications 6 à 8, **caractérisé en ce que** le volume d'aspiration de l'accumulateur hydraulique est adapté au volume de passage de la quantité de fluide prévue pour le lavage à contre-courant des éléments filtrants respectifs (22).

10. Dispositif de filtres de lavage à contre-courant selon l'une des revendications 1 à 9, **caractérisé en ce que** le dispositif à dépression (42) génère par impulsions un coup de dépression sur l'élément filtrant à nettoyer (22).
